# EUROPÄISCHE PATENTSCHRIFT

(11) **EP 0 932 828 B1**
(45) Veröffentlichungstag und Bekanntmachung des Hinweises auf die Patenterteilung: **15.01.2003**
(21) Anmeldenummer: 97912051.6
(22) Anmeldetag: 15.10.1997
(51) Int. Cl.: G01N 27/12

(54) **ANORDNUNG FÜR GASSENSORELEKTRODEN**
DEVICE FOR GAS-SENSORING ELECTRODES
DISPOSITIF POUR ELECTRODES DETECTRICES DE GAZ

(30) Priorität: 15.10.1996 DE 19642453
(43) Veröffentlichungstag der Anmeldung: 04.08.1999
(73) Patentinhaber: ROBERT BOSCH GMBH, 70442 Stuttgart (DE)
(72) Erfinder: HAHN, Dietmar, D-70839 Gerlingen (DE); FLIK, Gottfried, D-71229 Leonberg (DE); SCHUMANN, Bernd, D-71277 Rutesheim (DE)
(86) Internationale Anmeldenummer: DE9702356
(87) Internationale Veröffentlichungsnummer: WO98016819

(56) Entgegenhaltungen:
- EP-A- 0 488 352
- EP-A- 0 529 668
- US-A- 5 086 286

## Beschreibung

### Stand der Technik

Die Erfindung betrifft ein Sensorelement, insbesondere für einen elektrochemischen Meßfühler zur Bestimmung von Gaskonzentrationen, sowie ein Verfahren zur Herstellung eines Sensorelementes mit dreidimensionaler Elektrodenanordnung nach der Gattung der unabhängigen Ansprüche.

Die Verwendung von planaren Elektrodenanordnungen für chemische Sensoren ist bekannt. Dabei werden die Gaskonzentrationen durch Bestimmung von Kapazitäts- und/oder Leitfähigkeitsanderungen in einem gassensitiven Material ermittelt. Ebenso ist die dreidimensionale Gestaltung von Elektrodenanordnungen bekannt, die die Sensitivität chemischer Sensoren weiter steigert (Lin et al., Sensor and Actuators 5 (1991), 223 bis 226). Die Herstellung dreidimensionaler Elektrodenanordnungen erfolgt gemäß Lin et al. indem auf ein Siliziumsubstrat zunächst eine metallische Schicht aufgesputtert und anschließend eine darauf aufgebrachte Photoresistschicht strukturiert wird. Die bei der Strukturierung des Photolacks entstandenen Lackgräben werden galvanisch aufgefüllt, wodurch eine dreidimensionale Elektrodenstruktur als inverse Resiststruktur entsteht. Nach Entfernen des Photoresists und einem Wegätzen der metallischen Galvanikstartschicht in den durch das Entfernen des Photoresists entstandenen Gräben werden diese, also die Elektrodenzwischenräume, mit einer gassensitiven Substanz gefüllt.

Aus DE 43 39 737 C1 ist ein Sensorelement mit einer auf einem Substrat aufgebrachten dreidimensionalen, Gräben einer bestimmten Tiefe bildenden Elektrodenanordnung zur Messung von Potentialen, Kapazitäts- und/oder Leitfähigkeitsänderungen in einer bis zu einer bestimmten Höhe nur in den Gräben angeordneten gassensitiven Schicht bekannt, wobei die Höhe der gassensitiven Schicht geringer ist als die Tiefe der Gräben. Dort wird jedoch weder die Tiefe der Gräben noch das Herstellungsverfahren der Elektroden angegeben. Aus EP 0 529 668 A1 ist ein Sensorelement bekannt, das eine auf einem Substrat aufgebrachte gassensitive Schicht aufweist, wobei die Leitfähigkeit der Schicht über Metallkontaktierungen am Rand der Schicht gemessen werden kann. Der Raum zwischen den Metallelektroden ist dabei jedoch nicht grabenförmig ausgestaltet, und es werden dort auch keine Dimensionen der Metallkontakte bzw. der gassensitiven Schicht angegeben.

Aus US 5,086,286 ist schließlich ein Sensorelement bekannt, bei dem auf einem Substrat eine kammförmige Elektrodenstruktur aus Gold mit einer Dicke von 50 nm aufgebracht ist, auf der sich eine gassensitive Schicht mit einer mittleren Dicke von 13 nm bis 50 nm befindet. Die gassensitive Schicht ist dabei jedoch nicht nur zwischen sondern auch auf den Goldelektroden angeordnet, und aufgrund ihrer geringen mittleren Dicke nicht geschlossen. Weiter ist dort vorgesehen, auf der Anordnung aus Substrat und gassensitiver Schicht Platin in Form von Inseln mit einer mittleren Dicke von maximal 3 nm aufzubringen.

### Vorteile der Erfindung

Das Sensorelement mit den in den unabhängigen Ansprüchen genannten Merkmalen weist demgegenüber den Vorteil auf, dass die dreidimensionale Struktur der Elektrodenanordnung als Haltestruktur für die katalytisch wirkende Schicht sowie auch für eine Schutzschicht und bereichsweise als Wandkatalysator verwendet werden kann. Dadurch, dass das in die Gräben eingebrachte gassensitive Material diese nicht vollständig füllt, ist es einerseits möglich, das gassensitive Material mit der Katalysator- und/oder einer Schutzschicht zu überschichten, und/oder andererseits von gassensitivem Material oder sonstigen Schichten nicht bedeckte
Bereiche der dreidimensionalen Elektrodenanordnung als Wandkatalysator zu verwenden. Insbesondere wirkt die dreidimensionale Struktur der Elektrodenanordnung als Haltestruktur für diese Schichten und sie gewährleistet einen stabilen Aufbau des Sensorelementes. In den erfindungsgemäßen Ausführungsformen, in denen die Innenwände, also die die Gräben bildenden Wände, der dreidimensionalen Elektrodenanordnung nicht vollständig mit den genannten, das gassensitive Material überdeckenden Schichten bedeckt sind, können die Innenwände als Wandkatalysator verwendet werden. Die Verwendung einer das gassensitive Material überdeckenden katalytischen Schicht zusammen mit der Verwendung der Innenwände der dreidimensionalen Elektrodenanordnung als Wandkatalysator ist insbesondere dann vorteilhaft, wenn das gas-sensitive Material keine vollständige Selektivität für das messende Gas aufweist. In einem solchen Fall ist es besonders wünschenswert, das zu untersuchende Gasgemisch einer Katalyse zu unterziehen, wobei das zu detektierende Gas katalytisch so umgewandelt wird, dass es von der gassensitiven Schicht erkannt und möglichst selektiv bestimmt wird. Erfindungsgemäß wird eine verbesserte Selektivität der Gasmessung im gassensitiven Material durch Verwendung der katalytisch wirkenden Schicht oder durch deren Einsatz zusammen mit der Wandkatalyse erreicht.

Die Erfindung sieht vor, dass die Höhe h der in die Gräben eingebrachten gassensitiven Schicht oder die Tiefe T der Gräben variieren kann, wobei jedoch die Höhe h im wesentlichen in jedem Bereich des Grabens geringer als die Tiefe T der Gräben vorzusehen ist.

Weitere vorteilhafte Ausgestaltungen der Erfindung sind den Unteransprüchen entnehmbar.

### Zeichnung

Die Erfindung wird anhand von Figuren und dazugehörigen Ausführungsbeispielen näher erläutert.
- Figur 1: schematisch die Abfolge der Verfahrensschritte zur Herstellung dreidimensionaler Elektrodenanordnungen, wobei das Sensorelement noch ohne die katalytisch wirkende Schicht im Längsschnitt dargestellt ist;
- Figur 2: schematisch in zweidimensionaler Darstellung eine mäanderförmige, dreidimensionale Vierpol-Elektrodenanordnung;
- Figur 3: schematisch in zweidimensionaler Darstellung eine rechteckförmige, dreidimensionale Zweipol-Elektrodenanordnung;
- Figur 4: schematisch in zweidimensionaler Darstellung eine spiralförmige, dreidimensionale Zweipol-Elektrodenanordnung;
- Figur 5: schematisch die Verwendung von Innenwände der im Längsschnitt dargestellten, dreidimensionalen Elektrodenanordnung zur Wandkatalyse, wobei das Sensorelement noch ohne die katalytisch wirkende Schicht dargestellt ist;
- Figur 6: schematisch die Verwendung der im Längsschnitt dargestellten, dreidimensionalen Elektrodenanordnung als Haltestruktur für Katalysator- und Schutzschichten;
- Figur 7: einen Sensorarray in 2x2-Anordnung;
- Figur 8: einen Sensorarray in einer kleeblattförmigen Anordnung und
- Figur 9: einen Sensorarray für temperaturabhängige Messungen in einer dritten Anordnung.

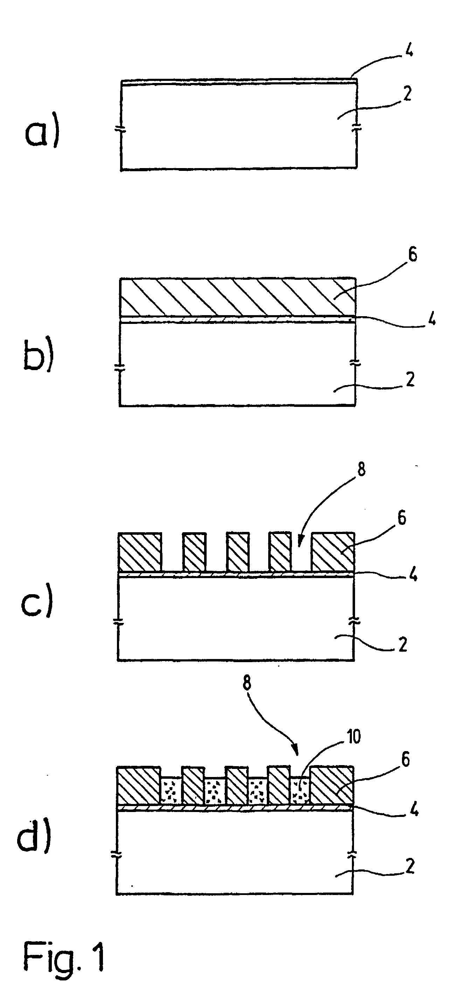

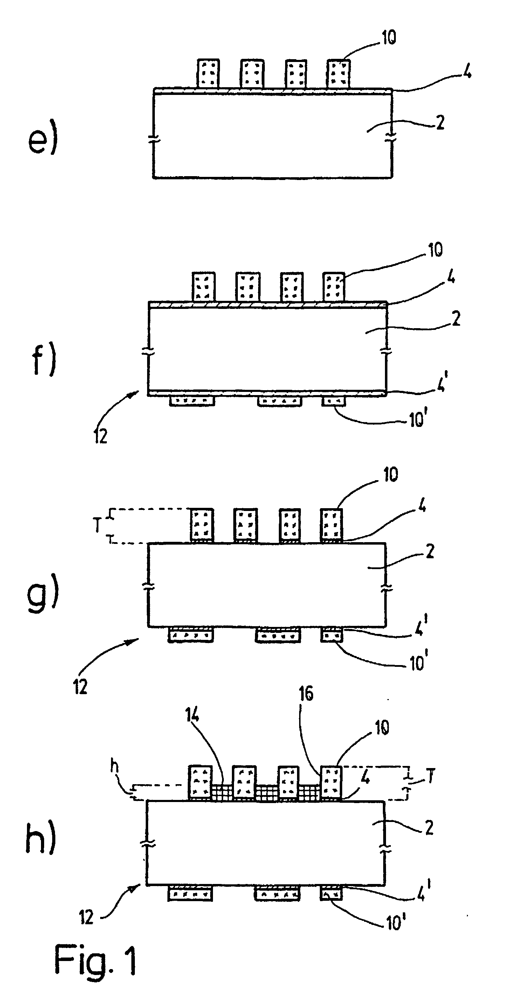

Die Figur 1 zeigt in schematischer Abfolge die Verfahrensschritte a) bis h) zur Herstellung dreidimensionaler, miniaturisierter Elektrodenanordnungen. Gemäß Schritt a) wird auf eine ebene Trägerplatte 2 nach einem Reinigungsschritt eine Galvanikstartschicht 4 durch Sputtern aufgebracht. Die Trägerplatte 2 kann insbesondere dann, wenn der herzustellende Sensor in hochkorrosiven Medien, beispielsweise in der Abgasdiagnostik eingesetzt werden soll, aus Al₂O₃ bestehen, auf das Platin als Galvanikstartschicht aufgebracht wird. Bei geringeren Anforderungen hinsichtlich der Korrosionsbeständigkeit können auch andere Substrate wie Silizium oder Glas sowie, zur Herstellung der Galvanikstartschicht, Metalle wie Gold, Silber, Kupfer, Chrom und andere verwendet werden. Wenn die Sensoren mit einer Auswerteelektronik integriert werden sollen, ist die Verwendung von Siliziumsubstraten besonders vorteilhaft.

Gemäß Schritt b) wird anschließend eine Photoresistschicht 6, zum Beispiel ein Photolack, Polyimid oder ein Festresist durch Aufschleudern (bei Flüssigresisten) oder Laminieren (bei Festresisten) ganzflächig auf die Trägerplatte 2 aufgetragen. Die Schichtdicke der Photoresistschicht 6 wird bei den Flüssigresisten durch die Umdrehungszahl und bei Festresisten durch die Anzahl der auflaminierten Resistlagen zwischen 10 µm und 100 µm eingestellt.

Gemäß Schritt c) wird die herzustellende metallische, dreidimensionale Elektrodenanordnung mit Hilfe einer photolithographischen Maske invers in die Photoresistschicht 6 übertragen. Gemäß eines UVtiefenlithographischen Verfahrens wird der Lack direkt über eine Maske belichtet. Eine andere Möglichkeit besteht darin, auf dem Photolack ein Oxid, ein Nitrid oder Metall abzuscheiden, welches photolithographisch strukturiert als Maske für einen Trockenätzprozess der Photoresistschicht 6 dient. Durch den Trockenätzprozess sind kleinere Strukturbreiten herstellbar als mit dem UV-tiefenlithographischen Verfahren. Beide Alternativen führen dazu, dass in der Photoresistschicht 6 Lackgräben 8 ausgebildet werden.

Gemäß Schritt d) wird in die Lackgräben 8 Metall abgeschieden, wobei die Lackgräben 8 bis zu deren Oberkante aufgefüllt werden können. Durch die Variation der Dicke der Metallschicht 10 ist es möglich, die Sensorempfindlichkeit gezielt einzustellen. Die Wahl des abzuscheidenden Materials ist von der geforderten Korrosionsbeständigkeit des Sensors abhängig, so dass Platin, Gold und Silber für hohe Anforderungen und für geringere Anforderungen Metalle wie Kupfer, Nickel oder ähnliche in Betracht kommen.

Gemäß Schritt e) wird die Photoresistschicht 6 aus der aufgebrachten Metallstruktur 10 herausgelöst, so dass freie dreidimensionale Elektrodenstrukturen erhalten werden. Je nach verwendetem Photoresist können alkalische Lösungen, zum Beispiel Kaliumhydroxid-Lösung oder organische Lösungsmittel wie Azeton Verwendung finden.

Gemäß Schritt f) kann in besonders vorteilhafter Weise auf der Rückseite 12 der Trägerplatte 2 eine Heizelektrode hergestellt werden, um den Sensor bei konstanter Temperatur halten zu können. Die Geometrie der Heizelektrode 10' wird durch eine Maskenstruktur festgelegt und die Strukturierung wie in den Schritten a) bis e) beschrieben durchgeführt.

Gemäß Schritt g) werden die Galvanikstartschichten 4 und 4' beseitigt, um die leitenden Verbindungen zwischen den Elektroden 10 des Sensors und auch des Heizers 10' zu unterbrechen. Die Galvanikstartschichten werden beseitigt, indem diese abgeätzt werden, beispielsweise durch naßchemisches Ätzen, anionisches Ätzen oder Trockenätzprozess.

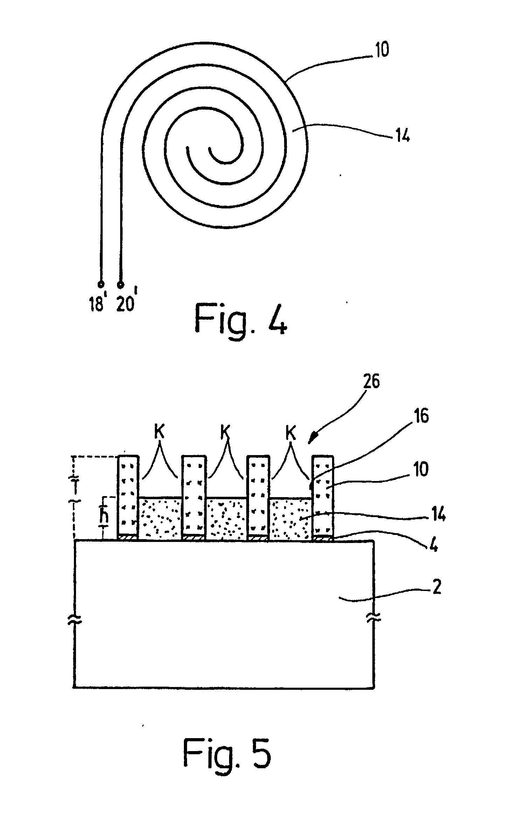

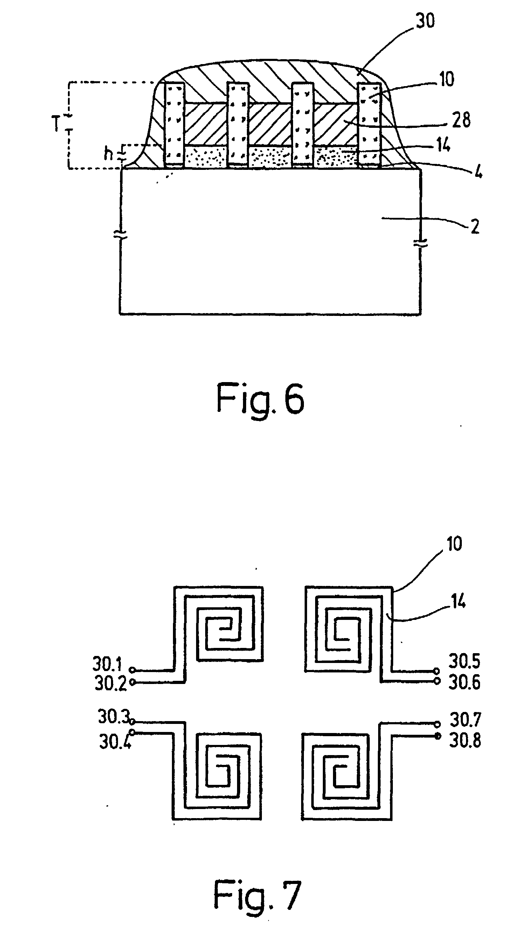

Gemäß Schritt h) wird in die Zwischenräume zwischen die Elektroden 10 mittels des Siebdruckverfahrens eine Paste eingefüllt, die anschließend bei mehreren Hundert. Grad gesintert wird und die das gassensitive Material enthaltende Schicht 14 bildet. Die Paste wird bis zu einer bestimmten Höhe h eingefüllt, die geringer als die Tiefe T der Gräben bzw. der dreidimensionalen Elektroden 10 ist. Über der gassensitiven Schicht 14 werden zwischen die Elektroden 10 weitere Schichten, beispielsweise Schutzschichten, sowie eine katalytisch aktive Schicht aufgebracht, wie in Figur 6 dargestellt. Die Innenwände 16 der Elektroden 10, die nicht von der gassensitiven Schicht 14 überdeckt sind, können insbesondere bei der Verwendung von
Platin als Elektrodenmaterial zur Katalyse K verwendet werden, wie in Figur 5 dargestellt.

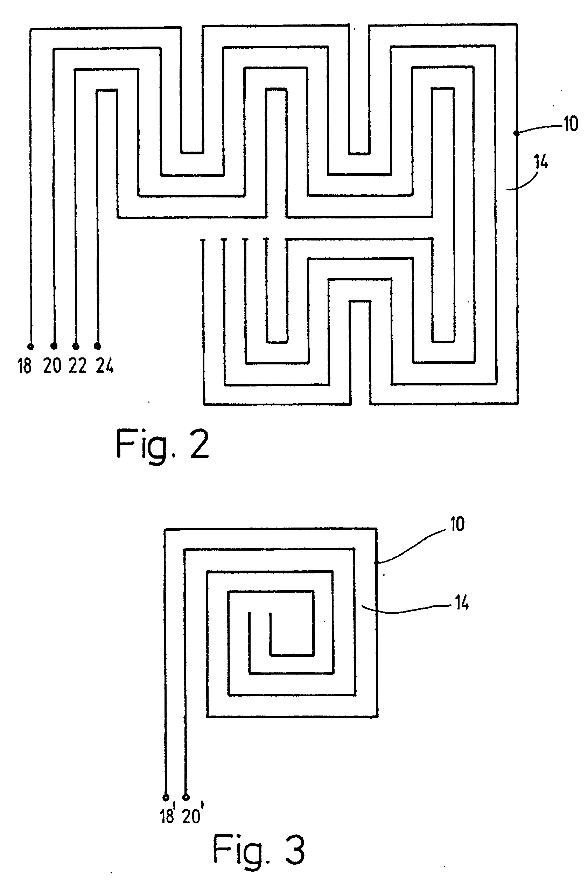

Die folgenden Figuren 2 bis 4 und 7 bis 9 zeigen schematisch in Draufsicht bevorzugte Elektrodenanordnungen, die in effektiver Form die gesamte Fläche des Sensors ausnutzen. Obwohl die Darstellung zweidimensional ist, weisen die dargestellten Elektrodenanordnungen eine dreidimensionale Form auf. Funktionsgleiche Strukturen sind mit gleichen Bezugsziffern versehen.

Die Figur 2 stellt eine dreidimensionale Elektrodenanordnung mit Vierpol-Geometrie dar. Dargestellt sind vier Einzelelektroden 18, 20, 22 und 24, die dementsprechend Vierpolmessungen ermöglichen. Die Vierpolmessung bietet gegenüber der Zweipolmessung den Vorteil, daß auftretende Kontaktwiderstände meßtechnisch erfaßt und somit eliminiert werden können. Der Figur 2 ist auch zu entnehmen, daß die Elektroden 18, 20, 22 und 24 zur effektiven Flächenausnutzung gewendelt werden, wobei die Bedingung eingehalten werden muß, daß sich nur immer dieselben Elektroden gegenüberstehen. Andernfalls würden Leckströme auftreten, welche die Sensorempfindlichkeit senken. Die Figur 2 stellt eine Elektrodenanordnung in Mäanderstruktur dar, bei denen die vier Elektroden 18, 20, 22 und 24 zusammenhängend sind. Neben dieser rechtwinklig verlaufenden Wendelung sind auch beliebig andere Elektrodengeometrien mit geschwungenen oder zickzackförmigen Verläufen erfindungsgemäß vorgesehen.

Die Figur 3 stellt eine dreidimensionale Elektrodenanordnung der Elektroden 18' und 20' in Zweipolgeometrie dar. Die Elektroden sind mäanderförmig angeordnet, wobei die Elektroden in einer rechteckförmigen Innenwendelform verlaufen.

Die Figur 4 stellt eine dreidimensionale Elektrodenanordnung der Elektroden 18' und 20' in Zweipolgeometrie mit spiralförmigen Elektrodenverlauf dar. Ebenso wie in den vorstehenden Figuren dient die Elektrodenstruktur einer guten Flächenausnutzung auf der Trägerplatte. Selbstverständlich kann der Elektrodenverlauf an die laterale Wärmeverteilung auf dem Substrat angepaßt werden, so dass der Sensorbereich genau auf eine isotherme Fläche gelegt werden kann.

Die Figur 5 verdeutlicht, dass die Füllhöhe h der gassensitiven Schicht 14 geringer als die Tiefe T der von den Elektroden 10 eingeschlossenen Gräben 26 ist. Die von dem gassensitiven Material 14 nicht bedeckten Innenwände 16 der Elektroden 10 sind vorzugsweise, insbesondere bei der Verwendung von Platin als Elektrodenmaterial, katalytisch aktiv. Das zu detektierende Gas wird an den Innenwänden katalytisch so umgewandelt, dass es von der darunter liegenden gassensitiven Schicht 14 detektiert werden kann.

Die Figur 6 verdeutlicht eine Ausführungsform der Erfindung, bei der auf die gassensitive Schicht zwei weitere Schichten aufgebracht wurden. Die bis zur Höhe h eingefüllte gassensitive Schicht 14 wird von einer Schicht 28 bedeckt, die der katalytischen Umwandlung des zu detektierenden Gases dient, so dass dieses in der Schicht 14 nachgewiesen werden kann. Über der katalytisch wirksamen Schicht 28 ist eine Schutz- oder Deckschicht 30 angeordnet, die die darunter liegenden Schichten 28 und 14 vor äußeren Einflüssen wie Feuchtigkeit und Schmutz schützt. Die dreidimensionale Elektrodenanordnung dient hier also als Haltestruktur für die katalytisch wirksame Schicht 28 und die Deckschicht 30.

Die Figur 7 zeigt die Zusammenfassung dreidimensionaler miniaturisierter Elektrodenanordnungen in einem 2x2-Bereich. Die Einzelelektroden sind mit 30.1 bis 30.8 bezeichnet.

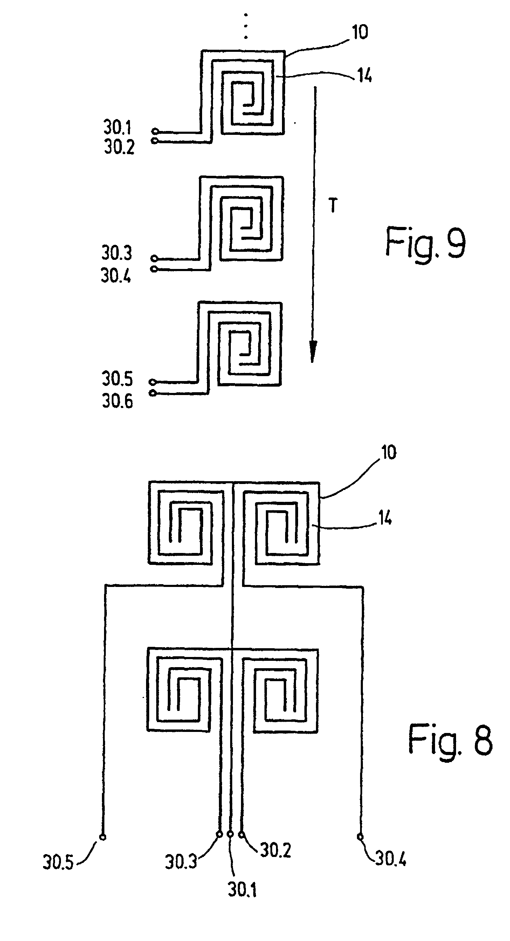

Die Figur 8 zeigt die Zusammenfassung einer dreidimensionalen Elektrodenanordnung zu einer Viererstruktur mit einer Mittelanzapfung, die in gewendelter Anordnung ausgeführt ist. Hiermit können die vier Einzelsensoren ortsaufgelöst, d. h. so betrieben werden, dass beispielsweise Einflüsse einer Gasströmung kompensiert werden können. Selbstverständlich sind auch andere Elektrodenanordnungen in kleeblattförmiger Struktur in beliebiger Geometrie, beispielsweise als runde und ellipsenförmige Wendeln, möglich.

Die Figur 9 verdeutlicht die Anordnung einzelner Sensoren entlang eines definierten Temperaturgradienten T. Diese Ausführungsform ermöglicht temperaturabhängige Messungen durch Einzelabfrage der Sensoren. Der Temperaturgradient T wird durch den Heizer auf der Rückseite auf der Trägerplatte 2 festgelegt.

Die Ausbildung der in den Figuren 7 bis 9 dargestellten Sensorarrays wird insbesondere durch die aufgrund der dreidimensionalen Strukturierung ermöglichten Miniaturisierung ermöglicht. Durch die Anordnung zu Arrays können ortsaufgelöste Messungen und auch die Detektion unterschiedlicher Gase durch die Verwendung mehrerer gassensitiver Substanzen ermöglicht werden.

## Patentansprüche

1. Sensorelement mit mindestens einer auf einer Trägerplatte (2) aufgebrachten dreidimensionalen, Gräben (26) einer bestimmten Tiefe (T) bildenden Elektrodenanordnung zur Messung von Potentialen, Kapazitäts- und/oder Leitfähigkeitsänderungen in einer in einer bestimmten Höhe (h) in den Gräben (26) angeordneten gassensitiven Schicht (14), wobei die Höhe (h) der gassensitiven Schicht (14) geringer als die Tiefe (T) der Gräben (26) ist, **dadurch gekennzeichnet, dass** die gassensitive Schicht (14) von einer katalytisch wirkenden Schicht (28) bedeckt ist, und dass die Tiefe der Gräben (26) zwischen 10 µm und 100 µm liegt.

2. Sensorelement nach Anspruch 1, **dadurch gekennzeichnet, dass** die gassensitive Schicht (14) nur in den Gräben (26) angeordnet ist.

3. Sensorelement nach einem der Ansprüche 1 oder 2, **dadurch gekennzeichnet, dass** in den Gräben (26) über der gassensitiven Schicht (14) oder katalytisch wirkenden Schicht (28) eine Schutzschicht (30) angeordnet ist.

4. Sensorelement nach einem der Ansprüche 1 bis 3, **dadurch gekennzeichnet, dass** die Elektroden (10) in Form einer Interdigitalstruktur angeordnet sind.

5. Sensorelement nach einem der Ansprüche 1 bis 4, **dadurch gekennzeichnet, dass** die Elektrodenanordnung aus vier Einzelelektroden (18, 20, 22, 24) gebildet ist, die eine Vierpolmessung erlauben.

6. Sensorelement nach einem der Ansprüche 1 bis 5, **dadurch gekennzeichnet, dass** die Trägerplatte (2) aus keramischem Material, Glas, Aluminiumoxid oder einem Silizium/Siliziumoxid-Gemisch besteht oder dieses enthält.

7. Sensorelement nach einem der Ansprüche 1 bis 6, **dadurch gekennzeichnet, dass** die Elektroden (10) aus Platin, Gold, Silber, Kupfer oder Nickel bestehen oder dieses enthalten.

8. Sensorarray umfassend mindestens zwei der Sensorelemente nach einem der Ansprüche 1 bis 7.

9. Elektrochemischer Messfühler zur Bestimmung von Gaskonzentrationen umfassend ein Sensorelement oder ein Sensorarray nach einem der vorhergehenden Ansprüche.

10. Verfahren zur Herstellung eines Sensorelementes mit dreidimensionaler Elektrodenanordnung, insbesondere eines Sensorelementes nach einem der Ansprüche 1 bis 7, wobei eine Galvanikstartschicht (4) auf einer Trägerplatte (2) abgeschieden, ein Photoresist (6) mit einer Dicke von 10 µm bis 100 µm auf der Galvanikstartschicht (4) aufgetragen, der Photoresist (6) strukturiert, dabei erzeugte Lackgräben (8) galvanisch bis zu einer definierten Höhe aufgefüllt, der Photoresist (6) entfernt, die Galvanikstartschicht (4) in den durch das Entfernen des Photoresists (6) entstandenen Elektrodengräben (26) einer bestimmten Tiefe (T) weggeätzt und zunächst gassensitives Material (14) in die Elektrodengräben (26) bis zu einer bestimmten Höhe (h) aufgefüllt wird, und wobei danach in den Elektrodengräben (26) ein katalytisch wirkendes Material (28) auf das gassensitive Material (14) aufgebracht wird.

11. Verfahren nach Anspruch 10, **dadurch gekennzeichnet, dass** eine Heizelektrode (10) auf der Rückseite (12) der Trägerplatte (2) hergestellt wird.

## Claims

1. Sensor element having at least one three-dimensional electrode arrangement, applied to a support plate (2) and forming trenches (26) of a specific depth (T), for measuring potentials, and changes in capacitance and/or conductivity in a gas-sensitive layer (14) arranged at a specific level (h) in the trenches (26), the level (h) of a gas-sensitive layer (14) being less than the depth (T) of the trenches (26), **characterized in that** the gas-sensitive layer (14) is covered by a catalytically acting layer (28), and **in that** the depth of the trenches (26) is between 10 µm and 100 µm.

2. Sensor element according to Claim 1, **characterized in that** the gas-sensitive layer (14) is arranged only in the trenches (26).

3. Sensor element according to Claim 1 or 2, **characterized in that** a protective layer (30) is arranged in the trenches (26) over the gas-sensitive layer (14) or catalytically acting layer (28).

4. Sensor element according to one of Claims 1 to 3, **characterized in that** electrodes (10) are arranged in the form of an interdigital structure.

5. Sensor element according to one of Claims 1 to 4, **characterized in that** the electrode arrangement is formed from four individual electrodes (18, 20, 22, 24) which permits four-pole measurement.

6. Sensor element according to one of Claims 1 to 5, **characterized in that** the support plate (2) consists of a ceramic material, glass, aluminium oxide or a silicon/silicon oxide mixture, or contains this.

7. Sensor element according to one of Claims 1 to 6, **characterized in that** the electrodes (10) consist of platinum, gold, silver, copper or nickel, or contain this.

8. Sensor array comprising at least two of the sensor elements according to one of Claims 1 to 7.

9. Electrochemical detector for determining gas concentrations, comprising a sensor element or a sensor array according to one of the preceding claims.

10. Method for producing a sensor element having a three-dimensional electrode arrangement, in particular a sensor element according to one of Claims 1 to 7, in which an electroplated starting layer (4) is deposited on a support plate (2), a photoresist (6) with a thickness of 10 µm to 100 µm is applied to the electroplated starting layer (4), the photoresist (6) is structured, resist trenches (8) produced in the process being filled up to a defined level by electroplating, the photoresist (6) is removed, the electroplated starting layer (4) is etched away in the electrode trenches (26), produced by the removal of the photoresist (6), of a specific depth (T), and gas-sensitive material (14) is initially filled into the electrode trenches (26) up to a specific level (h), and thereafter a catalytically acting material (28) is applied in the electrode trenches (26) to the gas-sensitive material (14).

11. Method according to Claim 10, **characterized in that** a heating electrode (10) is produced on the rear side (12) of the support plate (2).

## Revendications

1. Elément de capteur ayant au moins un montage d'électrodes tridimensionnel appliqué sur une plaque de support (2) avec des sillons (26) d'une certaine profondeur (T) pour mesurer les variations de potentiel, de capacité et/ou de conductivité dans une couche (14) sensible au gaz, installée sur une hauteur déterminée (h) dans les sillons (26), la hauteur (h) sensible au gaz (14) étant inférieure à la profondeur (T) des sillons (26),
**caractérisé en ce que**
la couche sensible au gaz (14) est recouverte d'une couche (28) à effet catalytique et la profondeur des sillons (26) est comprise entre 10 µm et 10 µm.

2. Elément de capteur selon la revendication 1,
**caractérisé en ce que**
la couche sensible au gaz (14) n'est prévue que dans les sillons (26).

3. Elément de capteur selon l'une quelconque des revendications 1 ou 2,
**caractérisé en ce qu'**
une couche protectrice (30) est prévue dans les sillons (26) par-dessus la couche sensible au gaz (14) ou couche (28) à effet catalytique.

4. Elément de capteur selon l'une quelconque des revendications 1 à 3,
**caractérisé en ce que**
les électrodes sont installées sous la forme d'une structure interdigitée.

5. Elément de capteur selon l'une quelconque des revendications 1 à 4,
**caractérisé en ce que**
le montage des électrodes est formé de quatre électrodes séparées (18, 20, 22, 24) permettant une mesure sur quatre pôles.

6. Elément de capteur selon l'une quelconque des revendications 1 à 5,
**caractérisé en ce que**
la plaque de support (2) est en matière céramique, en verre, en oxyde d'aluminium ou en un mélange silicium/oxyde de silicium ou contient un tel mélange.

7. Elément de capteur selon l'une quelconque des revendications 1 à 6,
**caractérisé en ce que**
les électrodes (10) sont en platine, or, argent, cuivre ou nickel ou contiennent de tels matériaux.

8. Réseau de capteurs comportant au moins deux éléments de capteur selon l'une quelconque des revendications 1 à 7.

9. Capteur de mesure électrochimique pour déterminer des concentrations de gaz comprenant un élément de capteur ou un réseau de capteurs selon l'une quelconque des revendications précédentes.

10. Procédé de fabrication d'un élément de capteur avec un montage d'électrodes tridimensionnel, notamment un élément de capteur selon l'une quelconque des revendications 1 à 7, selon lequel on dépose une couche de départ galvanoplastique (4) sur une couche de support (2), on applique un photoresist (6) sur une épaisseur de 10 µm à 100 µm sur la couche de départ galvanique (4), on réalise la structure dans la couche de photoresist (6) et on remplit les sillons (8) ainsi formés de manière galvanique jusqu'à une hauteur définie, on enlève le photoresist (6), on enlève la couche de départ galvanique (4) dans les sillons des électrodes (26) obtenue par l'enlèvement du photoresist (6) sur une certaine profondeur (T) et ensuite on remplit les sillons avec une matière (14) sensible au gaz, dans les sillons (26) jusqu'à une hauteur déterminée (h) puis on applique dans les sillons d'électrodes (26), une matière à effet catalytique (28) sur l'ensemble de la matière sensible au gaz (14).

11. Procédé selon la revendication 10,
**caractérisé en ce qu'**
on fabrique une électrode chauffante (10) sur la face arrière (12) de la plaque de support (2).
